# EUROPEAN PATENT APPLICATION

(11) **EP 4 333 345 A1**
(43) Date of publication of application: **06.03.2024**
(21) Application number: 23191846.7
(22) Date of filing: 17.08.2023
(51) Int. Cl.: H04L 5/00

(54) **METHOD OF COMMUNICATION OPERATION PERFORMED BY USER EQUIPMENT AND APPARATUS USING THE SAME**

(30) Priority: 19.08.2022 US 202263399221 P
(71) Applicant: Industrial Technology Research Institute, Chutung, Hsinchu 310401 (TW)
(72) Inventor: Hsieh, Chia-Wen, 310017 Hsinchu County (TW); Lee, Chien-Min, 324 Taoyuan City (TW); Lo, Li-Chung, 407 Taichung City (TW)
(74) Representative: Kurig, Thomas

(57) **Abstract**

A method of communication operation performed by a user equipment (320) is provided. The method comprises: receiving a configuration (S600), wherein the configuration comprises a resource setting; receiving a first set of resource (S610) comprising at least one resource, wherein the first set of resource is configured via the configuration; and performing a first operation (S620), wherein the first operation is related to the first set of resource.

## Description

### BACKGROUND

### Technical Field

The disclosure relates to a method of link monitoring and recovery and physical downlink control channel (PDCCH) monitoring for network energy saving and an apparatus using the same.

### Description of Related Art

As mentioned in Document [1], network energy saving is of great importance for environmental sustainability, to reduce environmental impact (greenhouse gas emissions), and for operational cost savings. As 5G is becoming pervasive across industries and geographical areas, handling more advanced services and applications requiring very high data rates (e.g. XR), networks are being denser, use more antennas (e.g. MIMO enhancement), larger bandwidths and more frequency bands. The environmental impact of 5G needs to stay under control, and novel solutions to improve network energy savings need to be developed.
Document [1]: RP-223540, New WID: Network energy savings for NR, Huawei [RAN Meeting #98-e]

In the current communication system, network energy saving methods can be achieved by adaptation of transmission power and adaptation of number of spatial elements.

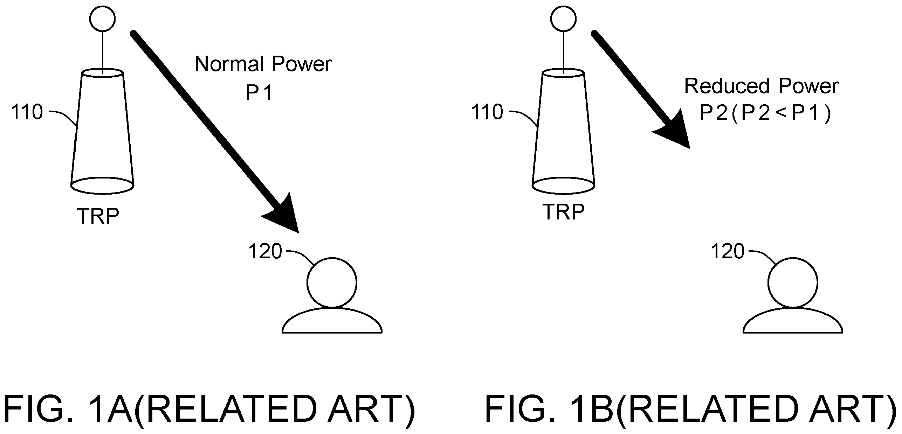

FIG. 1A and FIG. 1B are schematic diagrams illustrating adaptation of transmission power. gNB (gNode B) performs transmission power adaption via semi-static manner. TRP (TRansmission Points) 110 transmits a normal power P1 to a UE 120 in FIG. 1A. TRP 110 transmits a reduced power P2 to the UE 120 in FIG. 1B, where the reduced power P2 is smaller than the normal power P1.

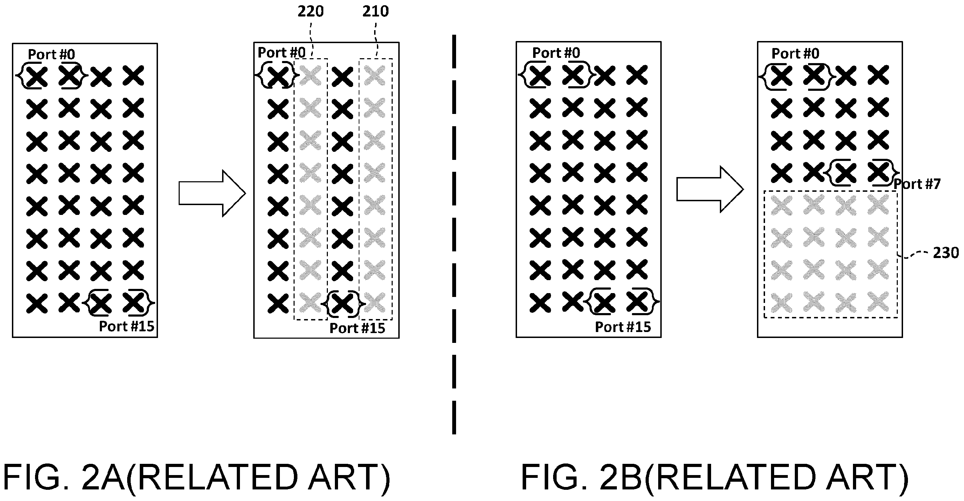

FIG. 2A and FIG. 2B are schematic diagrams illustrating adaptation of number of spatial elements. gNB mutes some spatial elements or ramps up the spatial elements via semi-static manner. RRC (re)configuration is needed for UE to adapt the number of spatial elements. For example, some antenna elements 210 and 220 are muted, but antenna port number remains the same (antenna ports are not muted) in FIG. 2A. In another example, antenna elements 230 are muted; and thus some antenna ports are muted (antenna port number is changed) in FIG. 2B.

The current communication system may have some problems as follows. Traffic arrival, traffic buffer status, and the channel condition cannot be tracked timely if the adaptation is applied via semi-static manner. It may cause transmission delay or performance reduction due to the semi-static manner. Instead of semi-static manner, the other adaptation manner can be considered (e.g. dynamic adaptation as agreed in RAN1 meeting).

### SUMMARY

The disclosure provides a method of communication operation performed by a user equipment (UE). The method comprises: receiving a configuration, wherein the configuration comprises a resource setting; receiving a first set of resource comprising at least one resource, wherein the first set of resource is configured via the configuration; and performing a first operation, wherein the first operation is related to the first set of resource.

The disclosure provides an apparatus for a communication operation. The apparatus comprises one or more receivers, one or more transmitters, a memory storing instructions, and a processor. The memory stores instructions. The processor executes the instructions. Execution of the instructions by the processor causes the processor to: receive a configuration, wherein the configuration comprises a resource setting; receive a first set of resource comprising at least one resource, wherein the first set of resource is configured via the configuration; and perform a first operation, wherein the first operation is related to the first set of resource.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1A and FIG. 1B are schematic diagrams illustrating adaptation of transmission power.
FIG. 2A and FIG. 2B are schematic diagrams illustrating adaptation of number of spatial elements.
FIG. 3 is a schematic diagram illustrating dynamic adaptation of transmission power.
FIG. 4 and FIG. 5 are schematic diagrams illustrating dynamic adaptation of number of spatial elements.
FIG. 6A is a block diagram illustrating an apparatus for a communication operation according to an embodiment of the disclosure.
FIG. 6B is a flowchart of a method of communication operation performed by a user equipment according to an embodiment of the disclosure.
FIG. 7 is a schematic diagram illustrating UE procedure for performing link monitoring and recovery.
FIG. 8 is a schematic diagram illustrating RS for beam failure detection (BFD) associated with a set of mode according to a first embodiment.
FIG. 9A is a schematic diagram illustrating beam failure procedure is reset according to the first embodiment.
FIG. 9B is a schematic diagram illustrating beam failure procedure is not reset according to the first embodiment.
FIG. 10 is a schematic diagram illustrating RS for beam failure recovery (BFR) associated with a set of mode according to a second embodiment.
FIG. 11 is a schematic diagram illustrating RS for link monitoring and recovery associated with a set of mode according to a third embodiment.
FIG. 12 illustrates out-of-sync and in-sync block error rates for different modes according to the third embodiment.
FIG. 13 is a schematic diagram illustrating RS for link monitoring and recovery associated with a mode according to a fourth embodiment.
FIG. 14A and FIG 14B are schematic diagrams illustrating PDCCH monitoring associated with a mode according to a fifth embodiment.
FIG. 15 is a schematic diagram illustrating PDCCH monitoring associated with a mode according to a sixth embodiment.

### DESCRIPTION OF THE EMBODIMENTS

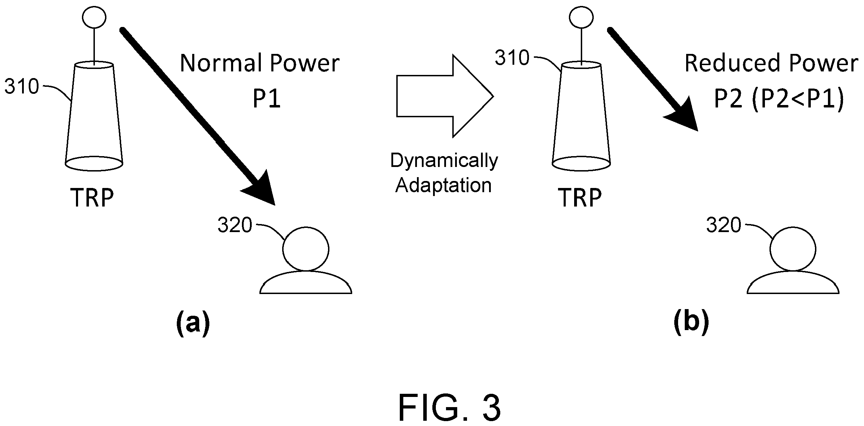

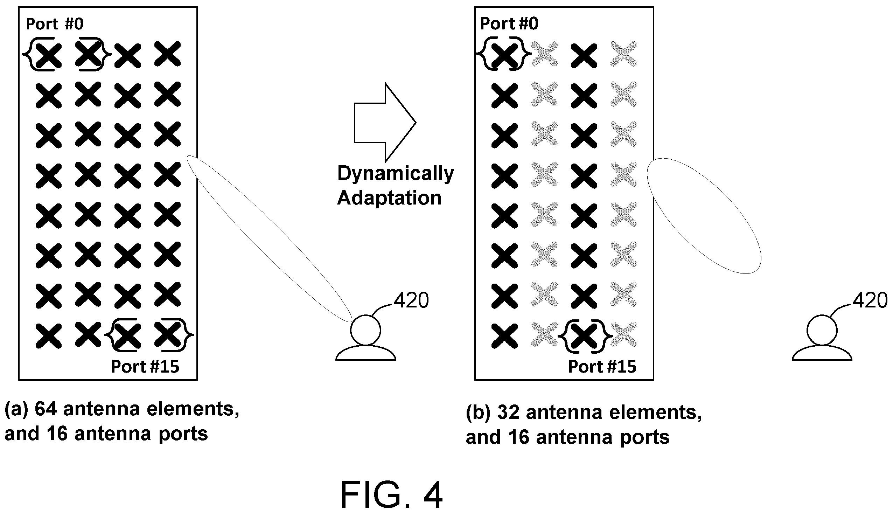

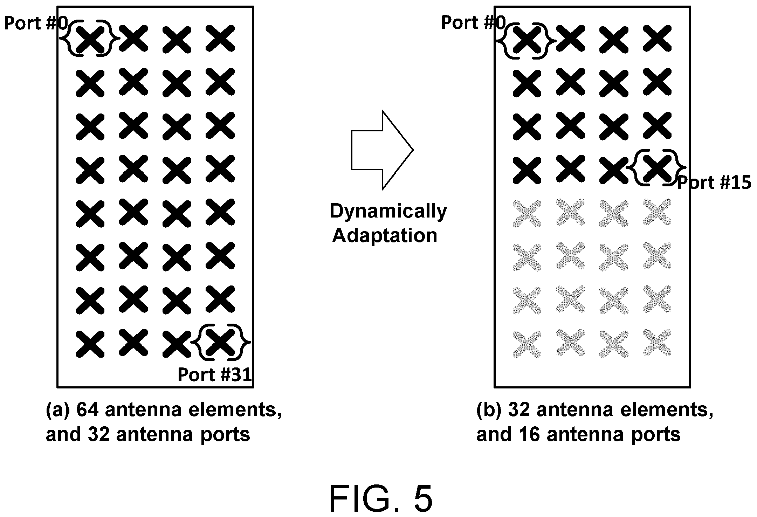

FIG. 3 is a schematic diagram illustrating dynamic adaptation of transmission power, wherein dynamic adaptation of transmission power can be indicated/signaled via physical layer signaling (e.g. wake-up signal (WUS), downlink control information (DCI)). FIG. 4 and FIG. 5 are schematic diagrams illustrating dynamic adaptation of number of spatial elements, wherein dynamic adaptation of number of spatial elements may be indicated/signaled via physical layer signaling (e.g. WUS, DCI). For network energy saving, dynamic adaptation of transmission power and/or number of spatial elements can be considered. However, dynamic behavior may suffer some problems, e.g. coverage loss due to transmission power adaptation, antenna element adaptation, or antenna port adaptation, which should be solved. A method of communication operation performed by a user equipment provided in the disclosure can at least solve said problems.

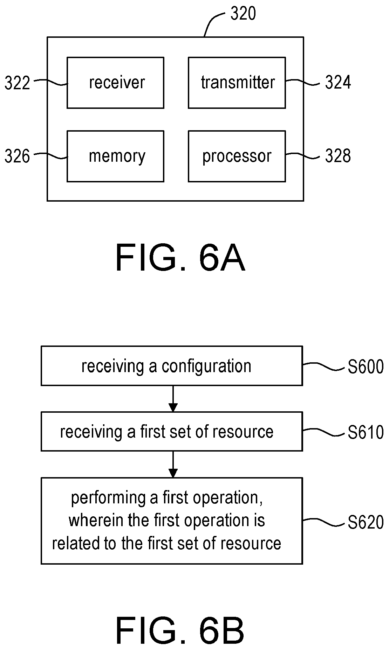

FIG. 6A is a block diagram illustrating an apparatus (e.g. a user equipment 320) for a communication operation according to an embodiment of the disclosure. FIG. 6B is a flowchart of a method of communication operation performed by a user equipment according to an embodiment of the disclosure. Referring to FIG. 3 to FIG. 6B, the user equipment 320 comprises one or more receivers 322, one or more transmitters 324, a memory 326, and a processor 328. The memory 326 stores instructions. The processor 328 executes the instructions. Execution of the instructions by the processor 328 causes the processor 328 to perform the method of communication operation as illustrated in FIG. 6B.

In step S600, the UE 320 receives a configuration. The configuration comprises a resource setting. In an embodiment, the configuration is configured via physical layer signaling (e.g. WUS, DCI) and/or higher layer signaling (e.g. MAC, RRC). In step S610, the UE 320 receives a first set of resource. The first set of resource is configured via the configuration, and comprises at least one resource. In step S620, the UE 320 performs a first operation, wherein the first operation is related to the first set of resource.

The first operation may comprise beam failure detection (BFD), beam failure recovery (BFR), link monitoring, link recovery, and physical downlink control channel (PDCCH) monitoring/detection. The first set of resource may comprise channel state information (CSI) - reference signal (RS) resource, non-zero power (NZP) CSI-RS resource, CSI - interference measurement (IM) resource, synchronization signal (SS), physical broadcast channel (PBCH), BFD-RS, BFR-RS, radio link monitoring RS (RLM-RS), PDCCH, control channel element (CCE), and control resource set (CORESET).

In addition, the first set of resource may comprise PDCCH, CCE, and CORESET if the first operation is PDCCH monitoring/detection.

In an embodiment, the method of the disclosure may further comprise a step of receiving a first indicator. The first indicator comprises a first mode. The first mode may comprise a first indication of power value, a first indication of power level, a first indication of antenna port number, a first indication of antenna port subset, a first indication of antenna element number, a first indication of antenna element subset, a first Cell-ID, a first search space (SS) set index, a first control resource set (CORESET) identity (ID), a first search space configuration, and a first transmission configuration indication (TCI) state, etc.

If the indicator is received, the UE 320 may reset or restart the first operation after receiving the indicator. If the indicator is not received, the first mode is set to be a default mode. In an embodiment, the first indicator is carried by physical layer signaling (e.g. wake-up signal (WUS), downlink control information (DCI)) or higher layer signaling (e.g. medium access control (MAC), radio resource control (RRC)). In an embodiment, the first indicator is carried by UE-specific, cell-specific, or group-UE specific signaling.

In an embodiment, the first mode comprises a first spatial adaptation pattern. The first spatial adaptation pattern comprises a first indication of power value, a first indication of power level, a first indication of antenna port number, a first indication of antenna port subset, a first indication of antenna element number, a first indication of antenna element subset, a first Cell-ID, a first SS set index, a first CORESET ID, a first search space configuration, and a first TCI state, etc.

More details of the method of the disclosure will be described in the following description.

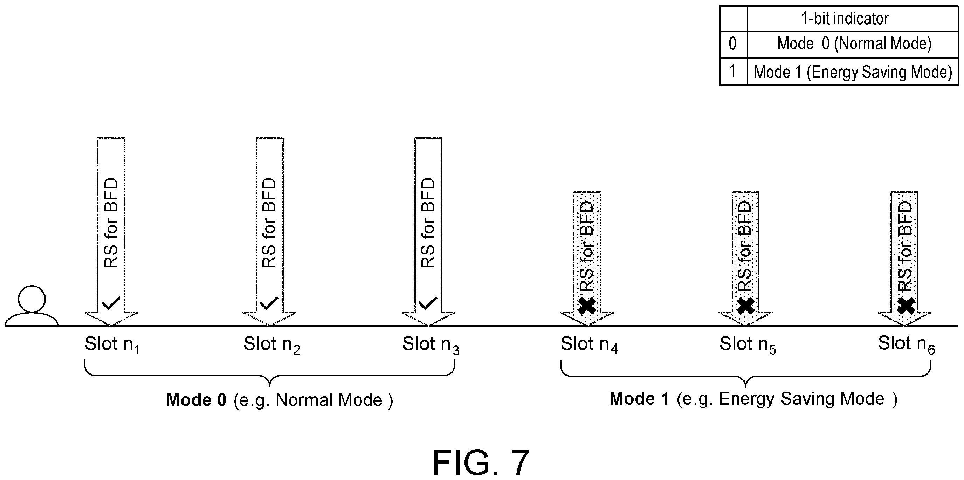

FIG. 7 is a schematic diagram illustrating UE procedure for performing link monitoring and recovery. The link monitoring and recovery may comprise radio link monitoring, beam failure detection, beam failure recovery, and candidate beam(s) selection for link recovery. Periodic RS may be monitored by the UE, wherein the periodic RS and PDCCH have the same TCI state. The physical layer in the UE assesses the radio link quality according to the periodic RS against the threshold. In FIG. 7, the "tick" means beam failure instance (BFI) is not detected, when the quality of periodic RS is not worse than a threshold, and the "cross" means BFI is detected, when the quality of periodic RS is worse than the threshold. The UE procedure for performing link monitoring and recovery (e.g. BFD) during dynamic adaptation of the transmission power and/or spatial elements should be defined.

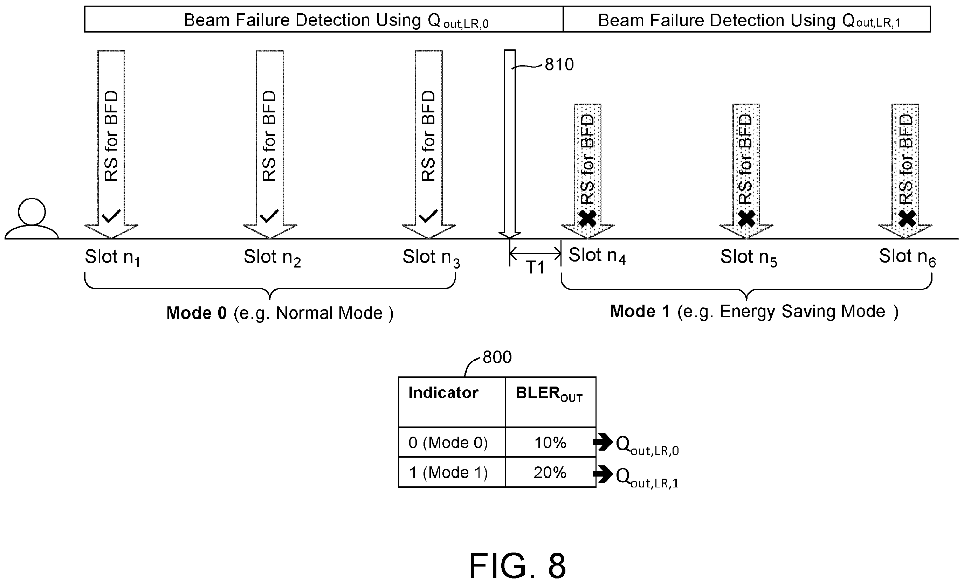

FIG. 8 is a schematic diagram illustrating RS for beam failure detection (BFD) associated with a set of mode according to a first embodiment, wherein the set of mode comprises at least one mode. The first embodiment is an embodiment for Beam Failure Detection (BFD), and different thresholds can be applied for different modes. RS(s) for BFD comprises CSI-RS, SSB, BFD-RS set.

Since the UE receives an indicator 810 for indicating mode m, that the UE performs BFD by assessing the radio link quality is worse than a threshold Qout,LR,m, wherein threshold Qout,LR,m is corresponding to mode m. The threshold Q_{out,LR,m} may be determined according to mode m wherein m=0 or 1. Q_{out,LR,m} corresponds to the value of *rlmInSyncOutOfSyncThreshold,* for Qₒᵤₜ wherein Qₒᵤₜ is defined as the level at which the downlink radio link cannot be reliably received and correspond to the out-of-sync block error rate (BLERₒᵤₜ) as defined in table 800 of FIG. 8.

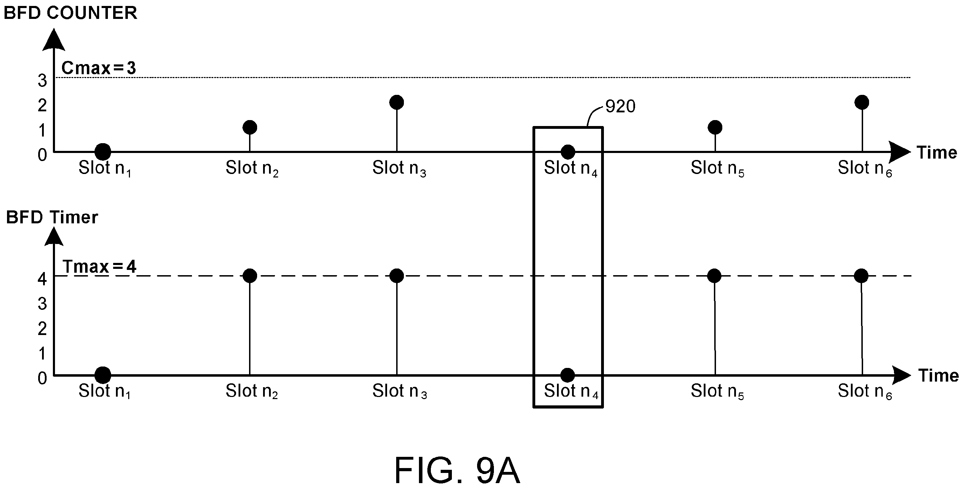

FIG. 9A is a schematic diagram illustrating beam failure procedure is reset according to the first embodiment. In FIG. 9A, Cmax determines after how many BF events the UE triggers beam failure recovery, and Tmax is a timer for beam failure detection. Cmax and Tmax are, for example, configured by higher layer signal. If the UE is operating in the different mode in slot n₄, beam failure procedure is reset, as shown in 920 of FIG. 9A.

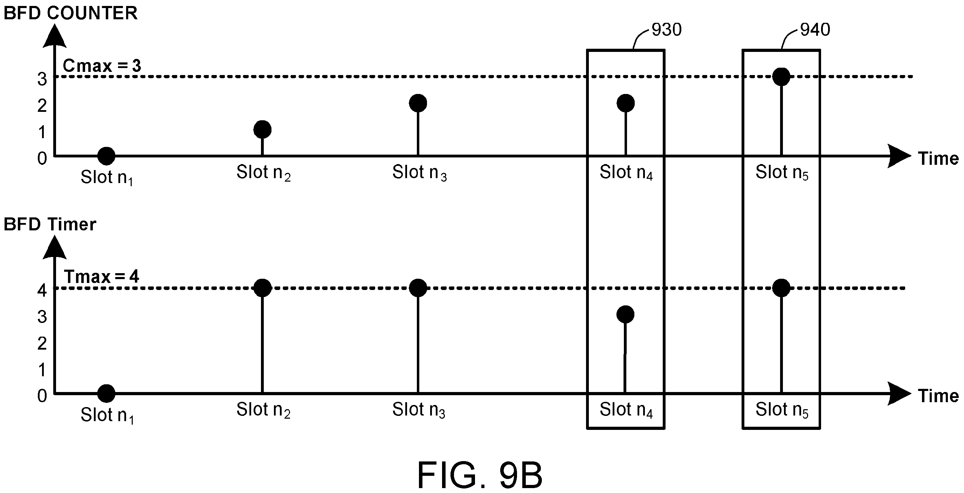

FIG. 9B is a schematic diagram illustrating beam failure procedure is not reset according to the first embodiment. If the UE is operating in the different mode in slot n₄, beam failure procedure is not reset, as shown in 930 of FIG. 9B. In slot n₅, beam failure is declared as BFI counter is larger than or equal to Cmax before BFD timer expires, as shown in 940 of FIG. 9B.

In the first embodiment, the first set of resource comprises CSI-RS resource, NZP CSI-RS resource, SS, and BFD-RS if the first operation is BFD. The first set of resource is associated with more than one modes. The first set of resource can be associated with a first mode and a second mode. The first operation is performed according to a first set of counter and a first set of timer. The first set of counter comprises at least one counter, and the first set of timer comprises at least one timer. The first operation is performed according to a first set of threshold, and the first set of threshold is related to a first mode. The first set of threshold comprises at least one threshold, wherein different thresholds may be applied for different modes. The first set of threshold is corresponding to 'rlmInSyncOutOfSyncThreshold' and/or 'out-of-sync block error rate (BLERₒᵤₜ)' if the first operation is BFD.

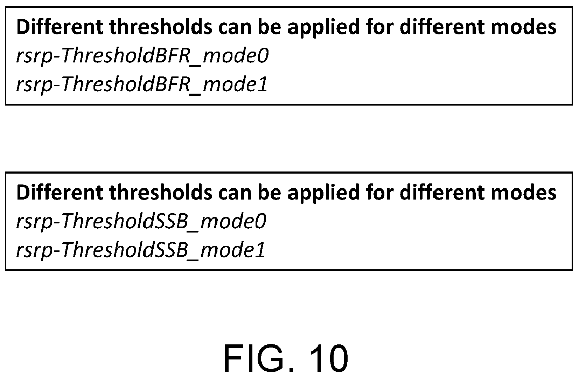

FIG. 10 is a schematic diagram illustrating RS for beam failure recovery (BFR) associated with a set of mode according to a second embodiment. The second embodiment is an embodiment for beam failure recovery (BFR). In the second embodiment, different thresholds can be applied for different modes as illustrated in FIG. 10. In this embodiment, the UE provides to higher layers the periodic CSI-RS configuration indexes and/or SS/PBCH block indexes from the set of resource(s) for BFD and the corresponding L1-RSRP measurements that are larger than or equal to the Q_{in,LR} threshold. Q_{in,LR} corresponds to the value provided by *rsrp-ThresholdSSB* or *rsrp-ThresholdBFR.*

*rsrp-ThresholdBFR* is L1-RSRP threshold used for determining whether a candidate beam may be used by the UE in BFR MAC CE. Different thresholds can be applied for different modes. For example, *rsrp-ThresholdBFR_modeO* is the threshold the mode 0, and *rsrp-ThresholdBFR_model* is the threshold the mode 1.

*rsrp-ThresholdSSB* is L1-RSRP threshold used for determining whether a candidate beam may be used by the UE to attempt contention free random access to recover from beam failure. For example, *rsrp-ThresholdSSB_mode0* is the threshold for the mode 0, and *rsrp-ThresholdSSB _model* is the threshold for the mode 1.

In the second embodiment, the first set of resource comprises CSI-RS resource, NZP CSI-RS resource, SS, PBCH, and BFD-RS if the first operation is BFR. The first set of resource is associated with more than one modes (e.g. a first mode and a second mode). The first operation is performed according to a first set of counter and a first set of timer. The first set of counter comprises at least one counter, and the first set of timer comprises at least one timer.

In the second embodiment, the first operation is performed according to a first set of threshold, and the first set of threshold is related to the first mode if the first mode is applied. The first set of threshold comprises at least one threshold. The first set of threshold is provided by a first `rsrp-ThresholdSSB' (e.g. rsrp-ThresholdSSB_mode0 illustrated in FIG. 10) and/or a first 'rsrp-ThresholdBFR' (e.g. rsrp-ThresholdBFR_mode0 illustrated in FIG. 10) if the first mode is applied.

In the second embodiment, the first operation is performed according to a second set of threshold, and the second set of threshold is related to the second mode if the second mode is applied. The second set of threshold comprises at least one threshold. The second set of threshold is provided by a second 'rsrp-ThresholdSSB' (e.g. rsrp-ThresholdSSB_model illustrated in FIG. 10) and/or a second 'rsrp-ThresholdBFR' (e.g. rsrp-ThresholdBFR_model illustrated in FIG. 10) if the second mode is applied.

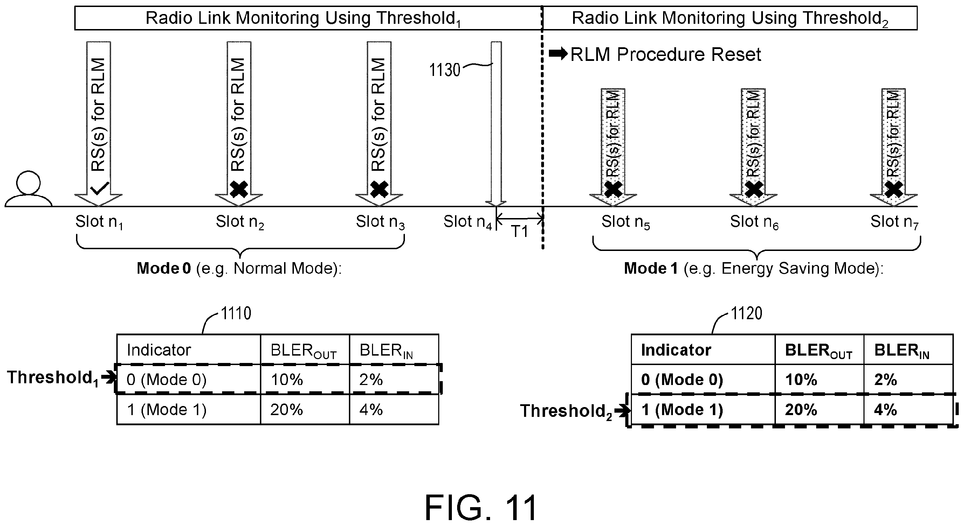

FIG. 11 is a schematic diagram illustrating RS for link monitoring and recovery associated with a set of mode according to a third embodiment, wherein the set of mode comprises at least one mode. In the third embodiment, different thresholds can be applied for different modes. If UE is operating in a different mode, radio link monitoring procedure is reset.

To be specific, for slot n₁ to slot n₄+T1, the first set of thresholds, e.g. Threshold₁ comprises BLERₒᵤₜ=10%, and BLERᵢₙ=2% as shown in table 1110 of FIG. 11, is applied for the mode 0, where T1 is an indicator active time. Since the UE receives an indicator 1130 for indicating mode 1 in slot n₄, radio link monitoring procedure is reset after slot n₄+T1. For slot n₄+T1 to slot n₆, the second set of thresholds, e.g. Threshold₂ comprises BLERₒᵤₜ=20%, and BLERᵢₙ=4% as shown in table 1120 of FIG. 11, is applied for the mode 1.

RS for link monitoring comprises SS/PBCH block (e.g. SS/PBCH block index can be provided by *RadioLinkMonitoringRS*), a set of resource indexes (e.g. can be provided by *RadioLinkMonitoringRS*), the RS(s) provided for the active TCI state for PDCCH reception, the RS(s) configured with *qcl-Type* set to "typeD", the RS(s) provided for active TCI states for PDCCH receptions in CORESETs, and the RS(s) corresponding to resource indexed provided by *RadioLinkMonitoringRS.*

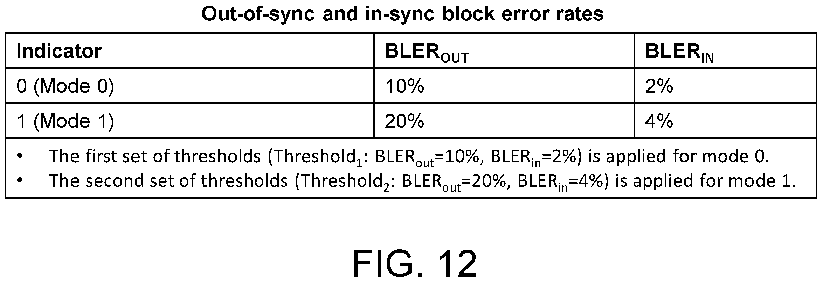

For example, the physical layer in the UE assesses the radio link quality, evaluated over the time period against thresholds (Qₒᵤₜ and Qᵢₙ) configured by *rlmInSyncOutOfSyncThreshold.* FIG. 12 illustrates different out-of-sync and in-sync block error rates may be applied for different modes according to the third embodiment. When the radio link quality is worse than the threshold Qₒᵤₜ for all resource in the set of resources for radio link monitoring, the physical layer in the UE indicates, in frames where the radio link quality is assessed, out-of-sync to higher layers. The threshold Qₒᵤₜ is defined as the level at which the downlink radio link cannot be reliably received and shall correspond to the out-of-sync block error rate (BLERₒᵤₜ) as defined in FIG. 12. According to the third embodiment, different out-of-sync block error rates (BLERₒᵤₜ) can be applied for different modes. When the radio link quality is better than the threshold Qin for any resource in the set of resources for radio link monitoring, the physical layer in the UE indicates, in frames where the radio link quality is assessed, in-sync to higher layers. The threshold Qin is defined as the level at which the downlink radio link quality can be received with significantly higher reliability than at Qₒᵤₜ and shall correspond to the in-sync block error rate (BLERᵢₙ) as defined in FIG. 12. According to the third embodiment, different in-sync block error rates (BLERᵢₙ) can be applied for different modes.

In the third embodiment, the first set of resource comprises SS, PBCH, and RLM-RS if the first operation is link monitoring. The first set of resource can be associated with more than one modes. The first set of resource can be associated with a first mode and a second mode. The first operation is performed according to a first set of counter and a first set of timer. The first set of counter comprises at least one counter, and the first set of timer comprises at least one timer.

In the third embodiment, the first operation is performed according to a first set of threshold wherein the first set of threshold is related to a first mode if the first mode is applied. The first set of threshold comprises at least one threshold. The first set of threshold comprises a first threshold provided by a first 'BLERₒᵤₜ' (e.g. 10% illustrated in FIG. 12) and a second threshold provided by a first 'BLERᵢₙ' (e.g. 2% illustrated in FIG. 12) if the first mode is applied.

In the third embodiment, the first operation is performed according to a second set of threshold wherein the second set of threshold is related to a second mode if the second mode is applied. The second set of threshold comprises at least one threshold. The second set of threshold comprises a first threshold provided by a second 'BLERₒᵤₜ' (e.g. 20% illustrated in FIG. 12) and a second threshold provided by a second 'BLERᵢₙ' (e.g. 4% illustrated in FIG. 12) if the second mode is applied.

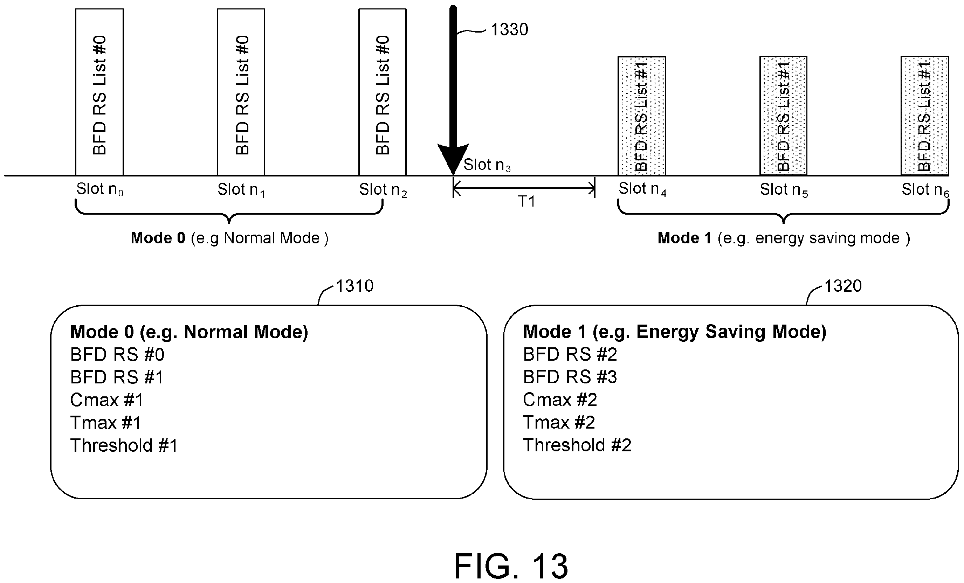

FIG. 13 is a schematic diagram illustrating RS for link monitoring and recovery associated with a mode according to a fourth embodiment. In the fourth embodiment, a field/bit or RRC IE can be used for indicating the mode. In the fourth embodiment, different procedures for link monitoring and recovery may be applied for different modes. For example, a first procedure for link monitoring and recovery is performed if a first mode is applied; and a second procedure for link monitoring and recovery is performed if a second mode is applied. Different procedures for link monitoring and recovery may comprise different counters, different timers, and different thresholds.

To be specific, BFD RS List #0 is transmitted with mode 0 in slot n₀ to slot n₂. A first set of parameters 1310 is used for link monitoring and recovery in slot n₀ to slot n₂, wherein the first set of parameters 1310 is related to mode 0. UE receives the indicator 1330 for indicating mode 1 in slot n₃, and the mode is changed after slot n₃+T1. Procedures for mode 0 and mode 1 are different. Therefore, a second set of parameters 1320 is used for link monitoring and recovery in slot n₃+T1 to slot n₆, wherein the second set of parameters 1320 is related to mode 1.

In the fourth embodiment, a first operation is performed according to the first set of parameters comprising a first set of counter, a first set of timer, a first set of threshold, and a first set of resource, if a first mode is applied. The first set of counter and the first set of timer are related to the first mode. The first set of threshold is related to the first mode, wherein the first set of threshold comprises at least one threshold. The first set of resource is associated with the first mode, wherein the first set of resource comprises at least one resource. Moreover, the first set of resource is configured via a configuration wherein the configuration may be indicated by higher layer signaling (e.g. RRC or MAC-CE). The first operation comprises beam failure detection (BFD), beam failure recovery (BFR), link monitoring, and link recovery.

In the fourth embodiment, the first set of threshold is corresponding to 'rlmInSyncOutOfSyncThreshold' related to the first mode and/or 'out-of-sync block error rate (BLERₒᵤₜ)' related to the first mode if the first operation is BFD. The first set of threshold is provided by `rsrp-ThresholdSSB' related to the first mode and/or 'rsrp-ThresholdBFR' related to the first mode if the first operation is BFR. The first set of threshold comprises a first threshold provided by 'BLERₒᵤₜ' related to the first mode and a second threshold provided by 'BLERᵢₙ' related to the first mode if the first operation is link monitoring.

In the fourth embodiment, a second operation is performed according to the second set of parameters comprising a second set of counter, a second set of timer, a second set of threshold, and a second set of resource, if a second mode is applied. The second set of counter and the second set of timer are related to the second mode. The second set of threshold is related to the second mode, wherein the second set of threshold comprises at least one threshold. The second set of resource is associated with the second mode, wherein the second set of resource comprises at least one resource. Moreover, the second set of resource is configured via a configuration wherein the configuration may be indicated by higher layer signaling (e.g. RRC or MAC-CE). The second operation comprises beam failure detection (BFD), beam failure recovery (BFR), link monitoring, and link recovery.

In the fourth embodiment, the second set of threshold is corresponding to 'rlmInSyncOutOfSyncThreshold' and/or 'out-of-sync block error rate (BLERₒᵤₜ)' if the second operation is BFD, wherein the second set of threshold is related to the second mode. The second set of threshold is provided by `rsrp-ThresholdSSB' and/or `rsrp-ThresholdBFR' if the second operation is BFR, wherein the second set of threshold is related to the second mode. The second set of threshold comprises a first threshold provided by 'BLERₒᵤₜ' and a second threshold provided by 'BLERᵢₙ' if the second operation is link monitoring, wherein the second set of threshold is related to the second mode.

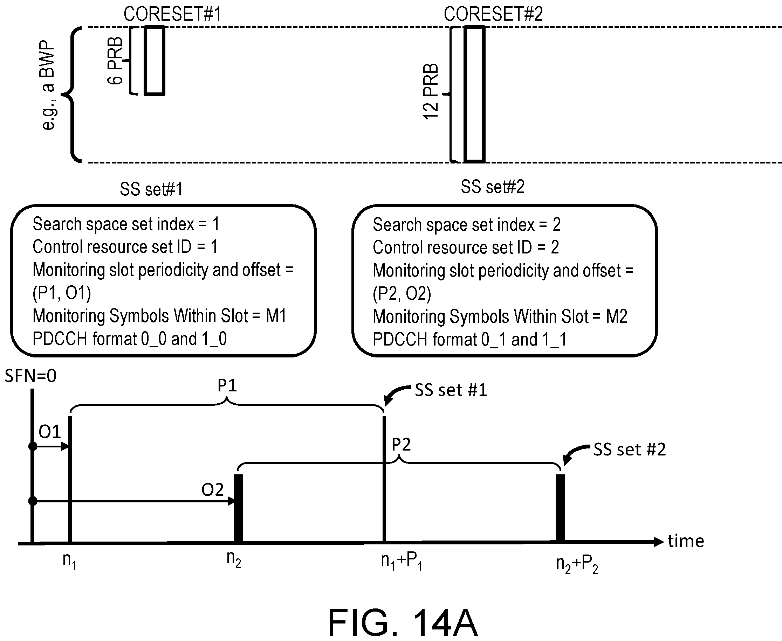

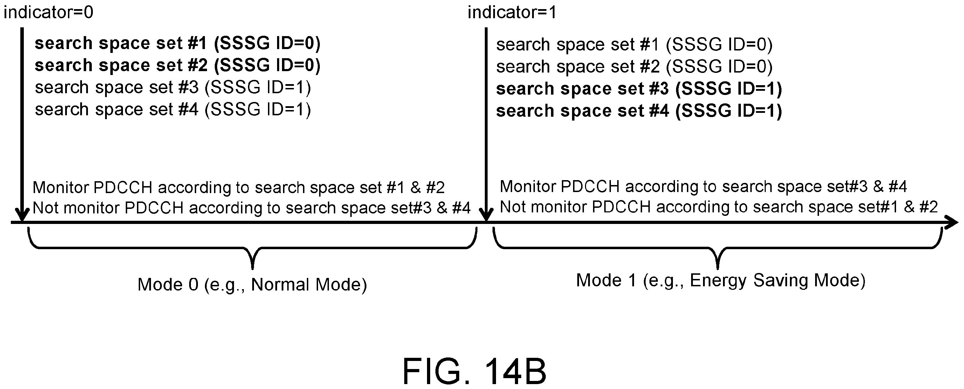

FIG. 14A and FIG 14B are schematic diagrams illustrating PDCCH monitoring associated with a mode according to a fifth embodiment. The PDCCH configuration may comprise control resource set (CORESET) configuration and search space (SS) set configuration. In the fifth embodiment, different CORESET configurations can be related to different modes; for example, a first CORESET configuration is associated with a first mode, and a second CORESET configuration is associated with a second mode. In the fifth embodiment, different SS set configurations can be related to different modes; for example, a first SS set configuration is associated with a first mode, and a second SS set configuration is associated with a second mode. A CORESET configuration may comprise a CORESET ID, a set of frequency domain resource of a bandwidth part (BWP) of a serving cell, and a TCI state (e.g. with a TCI state ID). A search space set configuration may comprise: a search space set index, a CORESET ID, a periodicity for PDCCH monitoring, an offset for PDCCH monitoring, a number of symbols within slot for PDCCH monitoring, a set of DCI format(s) for PDCCH monitoring (e.g., dci-Format0-1, dci-Format1-1, ...), a set of aggregation level for PDCCH monitoring, and a set of candidate number per aggregation level for PDCCH monitoring (*nrofCandidates*)*.* Moreover, the set of DCI format(s) for PDCCH monitoring comprises at least one DCI format. The set of aggregation level for PDCCH monitoring comprises at least one aggregation level. The set of candidate number per aggregation level for PDCCH monitoring (*nrofCandidates*) comprises at least one aggregation level.

In the fifth embodiment, the search space set configuration (e.g., search space set #1, #2, #3 or #4) can be related to a search space set group (SSSG) ID or a mode. In the fifth embodiment, UE performs PDCCH monitoring according to the first search space set configuration with SSSG ID=0, if the first mode (mode 0) is applied. And UE performs PDCCH monitoring according to the second search space set configuration with SSSG ID=1, if the second mode (mode 1) is applied The first search space set configuration comprises search space set #1 and #2, CORESET ID #1, a first monitoring periodicity P1, a first monitoring offset O1, a first number of monitoring symbols M1, and a first set of DCI format(s) for monitoring (DCI format 0_0 and 1_0). The second search space set configuration comprises search space set #3 and #4, CORESET ID #2, a second monitoring periodicity P2, a second monitoring offset O2, a second number of monitoring symbols M2, and a second set of DCI format(s) for monitoring (DCI format 0_1 and 1_1). The search space set configuration may be indicated via indicator.

In the fifth embodiment, different set of frequency domain resource of a BWP of a serving cell (e.g. CORESET) can be related to different modes. The first set of frequency domain resource of the BWP of the serving cell (e.g. CORESET #1 with 6 PRBs) is related to the first mode. The second set of frequency domain resource of the BWP of the serving cell (e.g. CORESET #2 with 12 PRBs) is related to the second mode.

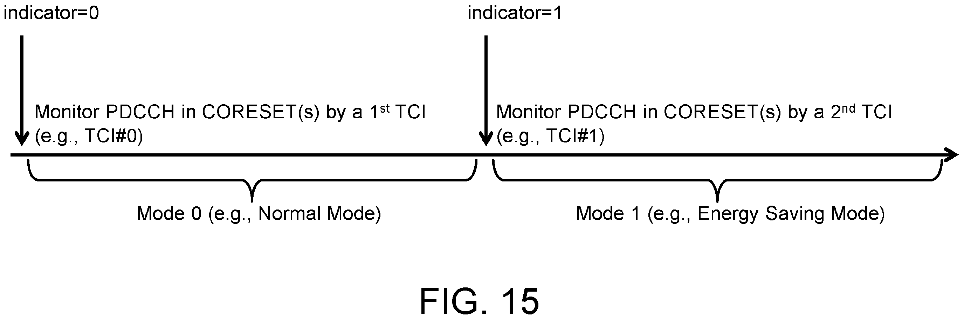

FIG. 15 is a schematic diagram illustrating PDCCH monitoring associated with a mode according to a sixth embodiment. UE performs PDCCH monitoring according to CORESET configuration wherein CORESET configuration comprises a set of frequency domain resource of a BWP of a serving cell, and a TCI state (e.g. with a TCI state ID). Different CORESET configuration can be related to different modes. In the sixth embodiment, UE performs PDCCH monitoring according to a first CORESET configuration if the first mode (e.g. mode 0) is applied. UE performs PDCCH monitoring according to a second CORESET configuration if the second mode (e.g. mode 1) is applied. The first CORESET configuration comprises a first TCI state (e.g. with TCI #0), and the second CORESET configuration comprises a second TCI state (e.g. with TCI #1).

In this disclosure, network can apply more than one mode. Different modes may have different properties, e.g. presence of signal, periodicity of signal, transmission power, antenna port number, antenna element number, etc. A mode can be an energy mode, a power mode, a sleep mode, etc. For simplicity, the term "mode" is used in this disclosure, but the other naming (e.g. level, status) is not precluded. For simplicity, two modes are used in this disclosure, but more than two modes (e.g. 3 or 4 modes) are not precluded.

In this disclosure, the mode may be indicated by the indicator, which is transmitted via UE-specific, cell-specific, or group-UE specific signaling, or carried by MAC-CE or DCI (e.g. DCI in USS, CSS, or Type-3 CSS). The indicator comprises a cell-ID related information (e.g. indicates which cell support/apply/adopt/change the mode after receiving the indicator). Combinations of embodiments disclosed in this disclosure should not be precluded.

In this disclosure, the gNB determines the downlink EPRE. For the downlink SS/PBCH SSS EPRE can be derived from the SS/PBCH downlink transmission power given by the parameter *ss-PBCH-BlockPower* provided by higher layer. The downlink CSI-RS EPRE can be derived from the SS/PBCH downlink transmission power given by the parameter *ss-PBCH-BlockPower* provided by higher layer, and CSI-RS power offset given by the parameter *powerControlOffsetSS* provided by higher layers.

In this disclosure, different values of *ss-PBCH BlockPower* can be applied for different modes. For example, *ss-PBCH-BlockPower _mode0* is applied for the mode 0, and *ss-PBCH-BlockPower _model* is applied for the mode 1. In addition, different values of *powerControlOffsetSS* can be applied for different modes. For example, *powerControlOffsetSS _mode0* is applied for the mode 0, and *powerControlOffsetSS _model* is applied for the mode 1.

In this document, for example, as disclosed in the fourth, the fifth and the sixth embodiments, when the UE receives an indicator, the UE may determine whether to change a current active BWP of a serving cell (e.g., according to the indicator).

For example, the UE may change current active BWP to a first BWP when the indicator indicating current mode of the serving cell would be changed from mode 0 (e.g., normal mode) to mode 1 (e.g., energy saving mode). The first BWP may be a dormancy BWP, a default BWP or a pre-configured BWP configured by gNB (e.g., via RRC signaling). The UE may change current active BWP to a second BWP when the indicator indicating current mode of the serving cell would be changed from mode 1 (e.g., energy saving mode) to mode 0 (e.g., normal mode). The second BWP may be a first active BWP or a pre-configured BWP configured by gNB (e.g., via RRC signaling).

In summary, in the embodiments of the disclosure, the method of communication operation is provided to solve problems that dynamic adaptation of transmission power and/or number of spatial elements may suffer. How to define the UE procedure for performing link monitoring and recovery (e.g. BFD, BFR, RLM) and PDCCH monitoring during dynamic adaptation of the transmission power and/or spatial elements is provided.

## Claims

1. A method of communication operation performed by a user equipment (UE) (320), and the method comprising:
receiving a configuration (S600), wherein the configuration comprises a resource setting;
receiving a first set of resource (S610) comprising at least one resource, wherein the first set of resource is configured via the configuration; and
performing a first operation (S620), wherein the first operation is related to the first set of resource.

2. The method of claim 1, further comprising:
receiving a first indicator (810, 1130, 1330), wherein the first indicator (810, 1130, 1330) comprises a first mode.

3. The method of claim 2, further comprising:
resetting or restarting the first operation after receiving the first indicator (810, 1130, 1330).

4. The method of claim 2, wherein the first mode is set to be a default mode if the first indicator (810, 1130, 1330) is not received.

5. The method of claim 2, wherein the first mode comprises a first indication of power value, a first indication of power level, a first indication of antenna port number, a first indication of antenna port subset, a first indication of antenna element number, a first indication of antenna element subset, a first Cell-ID, a first search space (SS) set index, a first control resource set (CORESET) identity (ID), a first search space configuration, and a first transmission configuration indication (TCI) state.

6. The method of claim 2, wherein the first mode comprises a first spatial adaptation pattern, wherein the first spatial adaptation pattern comprises a first indication of power value, a first indication of power level, a first indication of antenna port number, a first indication of antenna port subset, a first indication of antenna element number, a first indication of antenna element subset, a first Cell-ID, a first SS set index, a first CORESET ID, a first search space configuration, and a first TCI state.

7. The method of claim 1, wherein the first operation comprises beam failure detection (BFD), beam failure recovery (BFR), link monitoring, physical downlink control channel (PDCCH) monitoring/detection.

8. The method of claim 1, wherein the first set of resource comprises channel state information (CSI) - reference signal (RS) resource, non-zero power (NZP) CSI-RS resource, CSI - interference measurement (IM) resource, synchronization signal (SS), physical broadcast channel (PBCH), BFD-RS, BFR-RS, radio link monitoring RS (RLM-RS), PDCCH, control channel element (CCE), and CORESET.

9. The method of claim 1, wherein the first set of resource is associated with a first mode or more than one modes.

10. The method of claim 1, wherein the first operation is performed according to a first set of counter and a first set of timer, wherein the first set of counter and the first set of timer are related to a first mode.

11. The method of claim 1, wherein the first operation is performed according to a first set of threshold, wherein the first set of threshold is related to a first mode.

12. The method of claim 1, further comprising:
receiving a second set of resource comprising at least one resource, wherein the second set of resource is configured via the configuration; and
performing a second operation, wherein the second operation is related to the second set of resource.

13. The method of claim 12, wherein the second set of resource is associated with a second mode or more than one modes.

14. The method of claim 12, further comprising:
receiving a second indicator (810, 1130, 1330), wherein the second indicator (810, 1130, 1330) comprises a second mode.

15. The method of claim 12, wherein the second operation is performed according to a second set of counter and a second set of timer, wherein the second set of counter and the second set of timer are related to a second mode.

16. The method of claim 12, wherein the second operation is performed according to a second set of threshold, wherein the second set of threshold is related to a second mode.

17. The method of claim 1, further comprising:
performing the first operation according to a first search space set configuration, wherein the first search space set configuration comprises a first search space set index, a first CORESET ID, a first periodicity, a first offset, a first number of monitoring symbol(s), a first set of DCI format(s), a first set of aggregation level(s) for PDCCH monitoring, and a first set of candidate number per aggregation level for PDCCH monitoring (*nrofCandidates*), if the first operation is PDCCH monitoring/detection, wherein the first search space set configuration is related to a first mode.

18. The method of claim 2, wherein the first mode is derived by a first indication wherein the first indication comprises a first search space configuration, a first search space set index, a first CORESET ID, a first TCI state, or a first spatial adaptation pattern.

19. The method of claim 1, further comprising:
performing the first operation according to a first CORESET configuration wherein the first CORESET configuration comprises a first CORESET ID, a first set of frequency domain resource, and a first TCI state if the first operation is PDCCH monitoring/detection, wherein the first CORESET configuration is related to a first mode.

20. The method of claim 12, further comprising:
performing the second operation according to a second search space set configuration, wherein the second search space set configuration comprises a second search space set index, a second CORESET ID, a second periodicity, a second offset, a second number of monitoring symbol(s), a second set of DCI format(s), a second set of aggregation level(s) for PDCCH monitoring, and a second set of candidate number per aggregation level for PDCCH monitoring (*nrofCandidates*), if the second operation is PDCCH monitoring/detection, wherein the second search space set configuration is related to a second mode.

21. The method of claim 14, wherein the second mode is derived by a second indication wherein the second indication comprises a second search space configuration, a second search space set index, a second CORESET ID, a second TCI state, or a second spatial adaptation pattern.

22. The method of claim 12, further comprising:
performing the second operation according to a second CORESET configuration wherein the second CORESET configuration comprises a second CORESET ID, a second set of frequency domain resource, and a second TCI state if the second operation is PDCCH monitoring/detection, wherein the second CORESET configuration is related to a second mode.

23. An apparatus (320) for a communication operation, the apparatus (320) comprising:
one or more receivers (322);
one or more transmitters (324);
a memory (326) storing instructions; and
a processor (328) executing the instructions, wherein execution of the instructions by the processor (328) causes the processor (328) to:
receive a configuration, wherein the configuration comprises a resource setting;
receive a first set of resource comprising at least one resource, wherein the first set of resource is configured via the configuration; and
perform a first operation, wherein the first operation is related to the first set of resource.

24. The apparatus (320) of claim 23, wherein the apparatus (320) further receives a first indicator (810, 1130, 1330), wherein the first indicator (810, 1130, 1330) comprises a first mode.

25. The apparatus (320) of claim 24, wherein the first mode comprises a first indication of power value, a first indication of power level, a first indication of antenna port number, a first indication of antenna port subset, a first indication of antenna element number, a first indication of antenna element subset, a first Cell-ID, a first search space (SS) set index, a first control resource set (CORESET) identity (ID), a first search space configuration, or a first transmission configuration indication (TCI) state.

26. The apparatus (320) of claim 24, wherein the first mode comprises a first spatial adaptation pattern, wherein the first spatial adaptation pattern comprises a first indication of power value, a first indication of power level, a first indication of antenna port number, a first indication of antenna port subset, a first indication of antenna element number, a first indication of antenna element subset, a first Cell-ID, a first SS set index, a first CORESET ID, a first search space configuration, or a first TCI state..

27. The apparatus (320) of claim 23, wherein the first operation is performed according to a first set of counter and a first set of timer, wherein the first set of counter and the first set of timer are related to a first mode.

28. The apparatus (320) of claim 23, wherein the first operation is performed according to a first set of threshold, wherein the first set of threshold is related to a first mode.

29. The apparatus (320) of claim 23, wherein the apparatus (320) further performs the first operation according to a first search space set configuration wherein the first search space set configuration comprises a first search space set index, a first CORESET ID, a first periodicity, a first offset, a first number of monitoring symbol(s), a first set of DCI format(s), a first set of aggregation level(s) for PDCCH monitoring, and a first set of candidate number per aggregation level for PDCCH monitoring (*nrofCandidates*), if the first operation is PDCCH monitoring/detection, wherein the first search space set configuration is related to a first mode.

30. The apparatus (320) of claim 23, wherein the apparatus (320) further performs the first operation according to a first CORESET configuration wherein the first CORESET configuration comprises a first CORESET ID, a first set of frequency domain resource, and a first TCI state if the first operation is PDCCH monitoring/detection, wherein the first CORESET configuration is related to a first mode.
